# EUROPÄISCHE PATENTSCHRIFT

(11) **EP 1 613 925 B1**
(45) Veröffentlichungstag und Bekanntmachung des Hinweises auf die Patenterteilung: **16.05.2007**
(21) Anmeldenummer: 04723555.1
(22) Anmeldetag: 26.03.2004
(51) Int. Cl.: G01C 19/56

(54) **VERFAHREN ZUR KOMPENSATION EINES NULLPUNKTFEHLERS IN EINEM CORIOLISKREISEL UND CORIOLISKREISEL MIT NULLPUNKTFEHLERKOMPENSATION**
METHOD FOR COMPENSATING A ZERO-POINT ERROR IN A VIBRATORY GYROSCOPE AND VIBRATORY GYROSCOPE WITH ZERO-POINT ERROR COMPENSATION
PROCEDE POUR COMPENSER UNE DEVIATION RESIDUELLE DANS UN GYROSCOPE VIBRANT ET GYROSCOPE VIBRANT AVEC UNE COMPENSATION DE DEVIATION RESIDUELLE

(30) Priorität: 14.04.2003 DE 10317159
(43) Veröffentlichungstag der Anmeldung: 11.01.2006
(73) Patentinhaber: LITEF GmbH, 79115 Freiburg (DE)
(72) Erfinder: SCHRÖDER, Werner, 77955 Ettenheim (DE)
(74) Vertreter: Müller, Frithjof E.
(86) Internationale Anmeldenummer: PCT/EP2004/003247
(87) Internationale Veröffentlichungsnummer: WO 2004/090470

(56) Entgegenhaltungen:
- WO-A-01/14831
- DE-A- 10 062 347
- US-A- 5 908 986

## Beschreibung

Die Erfindung betrifft ein Verfahren zur Kompensation eines Nullpunktfehlers in einem Corioliskreisel.

Corioliskreisel (auch Vibrationskreisel genannt) werden in zunehmendem Umfang zu Navigationszwecken eingesetzt. Corioliskreisel weisen ein Massensystem auf, das in Schwingungen versetzt wird. Diese Schwingung ist in der Regel eine Überlagerung einer Vielzahl von Einzelschwingungen. Diese Einzelschwingungen des Massensystems sind zunächst voneinander unabhängig und lassen sich jeweils abstrakt als "Resonatoren" auffassen. Zum Betrieb eines Vibrationskreisels sind wenigstens zwei Resonatoren erforderlich: einer dieser Resonatoren (erster Resonator) wird künstlich zu Schwingungen angeregt, die im Folgenden als "Anregungsschwingung" bezeichnet wird. Der andere Resonator (zweiter Resonator) wird nur dann zu Schwingungen angeregt, wenn der Vibrationskreisel bewegt/gedreht wird. In diesem Fall treten nämlich Corioliskräfte auf, die den ersten Resonator mit dem zweiten Resonator koppeln, der Anregungsschwingung des ersten Resonators Energie entnehmen und diese auf die Ausleseschwingung des zweiten Resonators übertragen. Die Schwingung des zweiten Resonators wird im Folgenden als "Ausleseschwingung" bezeichnet. Um Bewegungen (insbesondere Drehungen) des Corioliskreisels zu ermitteln, wird die Ausleseschwingung abgegriffen und ein entsprechendes Auslesesignal (z. B. das Ausleseschwingungs-Abgriffsignal) daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-Systeme als auch als Closed-Loop-Systeme realisiert werden. In einem Closed-Loop-System wird über jeweilige Regelkreise die Amplitude der Ausleseschwingung fortlaufend auf einen festen Wert - vorzugsweise null zurückgestellt.

Die Dokumente US-A-5 908 986, WO-A-01/14831 und DE-A-100 62 347 beschreiben Corioliskreisel, die eine Auswerteschaltung mit synchroner Demodulation verwenden.

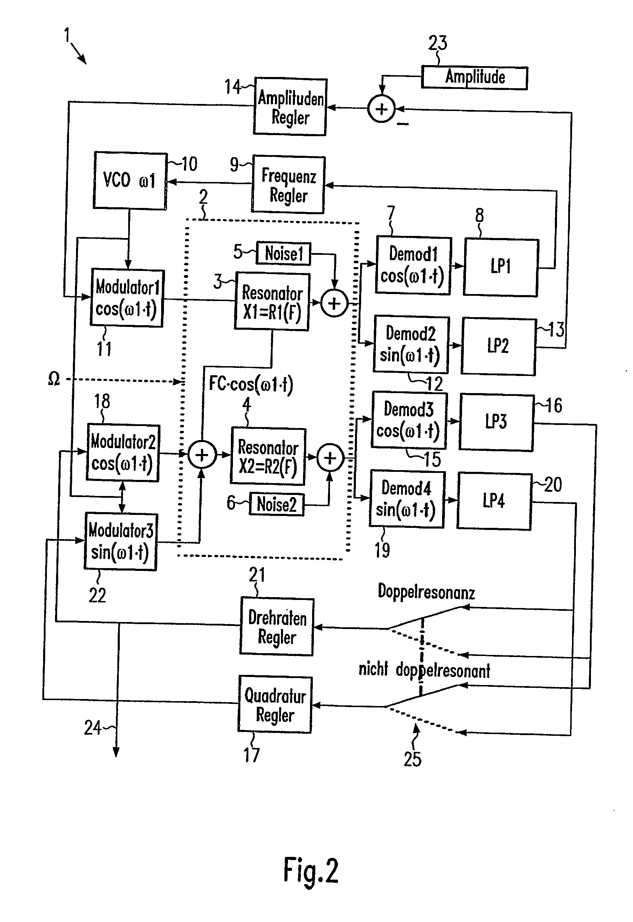

Im Folgenden wird zur weiteren Verdeutlichung der Funktionsweise eines Corioliskreisels unter Bezugnahme auf Figur 2 ein Beispiel eines Corioliskreisels in Closed-Loop-Ausführung beschrieben.

Ein solcher Corioliskreisel 1 weist ein in Schwingungen versetzbares Massensystem 2 auf, das im Folgenden auch als "Resonator" bezeichnet wird. Diese Bezeichnung ist zu unterscheiden von den oben erwähnten "abstrakten" Resonatoren, die Einzelschwingungen des "echten" Resonators darstellen. Wie bereits erwähnt, kann der Resonator 2 als System aus zwei "Resonatoren" (erster Resonator 3 und zweiter Resonator 4) aufgefasst werden. Sowohl der erste als auch der zweite Resonator 3, 4 sind jeweils an einen Kraftgeber (nicht gezeigt) und an ein Abgriffssystem (nicht gezeigt) gekoppelt. Das Rauschen, das durch die Kraftgeber und die Abgriffssysteme erzeugt wird, ist hier durch Noisel (Bezugszeichen 5) und Noise2 (Bezugszeichen 6) schematisch angedeutet.

Der Corioliskreisel 1 weist des Weiteren vier Regelkreise auf:

Ein erster Regelkreis dient zur Regelung der Anregungsschwingung (d.h. der Frequenz des ersten Resonators 3) auf eine feste Frequenz (Resonanzfrequenz). Der erste Regelkreis weist einen ersten Demodulator 7, ein erstes Tiefpassfilter 8, einen Frequenzregler 9, einen VCO ("Voltage Controlled Oscillator") 10 und einen ersten Modulator 11 auf.

Ein zweiter Regelkreis dient zur Regelung der Anregungsschwingung auf eine konstante Amplitude und weist einen zweiten Demodulator 12, ein zweites Tiefpassfilter 13 und einen Amplitudenregler 14 auf.

Ein dritter und ein vierter Regelkreis dienen zur Rückstellung derjenigen Kräfte, die die Ausleseschwingung anregen. Dabei weist der dritte Regelkreis einen dritten Demodulator 15, ein drittes Tiefpassfilter 16, einen Quadraturregler 17 und einen dritten Modulator 22 auf. Der vierte Regelkreis enthält einen vierten Demodulator 19, ein viertes Tiefpassfilter 20, einen Drehratenregler 21 und einen zweiten Modulator 18.

Der erste Resonator 3 wird mit dessen Resonanzfrequenz ω1 angeregt. Die resultierende Anregungsschwingung wird abgegriffen, mittels des ersten Demodulators 7 in Phase demoduliert, und ein demoduliertes Signalanteil wird dem ersten Tiefpassfilter 8 zugeführt, der daraus die Summenfrequenzen entfernt. Das abgegriffene Signal wird im Folgenden auch als Anregungsschwingungs-Abgriffsignal bezeichnet. Ein Ausgangssignal des ersten Tiefpassfilters 8 beaufschlagt einen Frequenzregler 9, der in Abhängigkeit des ihm zugeführten Signals den VCO 10 so regelt, dass die In-Phase-Komponente im Wesentlichen zu Null wird. Dazu gibt der VCO 10 ein Signal an den ersten Modulator 11, der seinerseits einen Kraftgeber so steuert, dass der erste Resonator 3 mit einer Anregungskraft beaufschlagt wird. Ist die In-Phase-Komponente Null, so schwingt der erste Resonator 3 auf seiner Resonanzfrequenz ω1. Es sei erwähnt, dass sämtliche Modulatoren und Demodulatoren auf Basis dieser Resonanzfrequenz ω1 betrieben werden.

Das Anregungsschwingungs-Abgriffsignal wird des Weiteren dem zweiten Regelkreis zugeführt und durch den zweiten Demodulator 12 demoduliert, dessen Ausgabe das zweite Tiefpassfilter 13 passiert, dessen Ausgangssignal wiederum dem Amplitudenregler 14 zugeführt wird. In Abhängigkeit dieses Signals und eines Soll-Amplitudengebers 23 regelt der Amplitudenregler 14 den ersten Modulator 11 so, dass der erste Resonator 3 mit einer konstanten Amplitude schwingt (d.h. die Anregungsschwingung weist eine konstante Amplitude auf).

Wie bereits erwähnt wurde, treten bei Bewegung/Drehungen des Corioliskreisels 1 Corioliskräfte - in der Zeichnung durch den Term FC·cos(ω1·t) angedeutet - auf, die den ersten Resonator 3 mit dem zweiten Resonator 4 koppeln und damit den zweiten Resonator 4 zum Schwingen anregen. Eine resultierende Ausleseschwingung der Frequenz ω2 wird abgegriffen, sodass ein entsprechendes Ausleseschwingungs-Abgriffsignal (Auslesesignal) sowohl dem dritten als auch dem vierten Regelkreis zugeführt wird. Im dritten Regelkreis wird dieses Signal durch den dritten Demodulator 15 demoduliert, Summenfrequenzen durch das dritte Tiefpassfilter 16 entfernt und das tiefpassgefilterte Signal dem Quadraturregler 17 zugeführt, dessen Ausgangssignal den dritten Modulator 22 so beaufschlagt, dass entsprechende Quadraturanteile der Ausleseschwingung rückgestellt werden. Analog hierzu wird im vierten Regelkreis das Ausleseschwingungs-Abgriffsignal durch den vierten Demodulator 19 demoduliert, durchläuft das vierte Tiefpassfilter 20, und ein entsprechend tiefpassgefiltertes Signal beaufschlagt einerseits den Drehratenregler 21, dessen Ausgangssignal proportional zur momentanen Drehrate ist und als Drehraten-Messergebnis auf einen Drehratenausgang 24 gegeben wird, und andererseits den zweiten Modulator 18, der entsprechende Drehratenanteile der Ausleseschwingung rückstellt.

Ein Corioliskreisel 1 wie oben beschrieben kann sowohl doppelresonant als auch nichtdoppelresonant betrieben werden. Wird der Corioliskreisel 1 doppelresonant betrieben, so ist die Frequenz ω2 der Ausleseschwingung annähernd gleich der Frequenz ω1 der Anregungsschwingung, wohingegen im nichtdoppelresonanten Fall die Frequenz ω2 der Ausleseschwingung verschieden von der Frequenz ω1 der Anregungsschwingung ist. Im Fall der Doppelresonanz beinhaltet das Ausgangssignal des vierten Tiefpassfilters 20 entsprechende Information über die Drehrate, im nichtdoppelresonanten Fall dagegen das Ausgangssignal des dritten Tiefpassfilters 16. Um zwischen den unterschiedlichen Betriebsarten doppelresonant/nichtdopelresonant umzuschalten, ist ein Doppelschalter 25 vorgesehen, der die Ausgänge des dritten und vierten Tiefpassfilters 16, 20 wahlweise mit dem Drehratenregler 21 und dem Quadraturregler 17 verbindet.

Aufgrund unvermeidbarer Fertigungstoleranzen müssen leichte Fehlausrichtungen zwischen den Anregungskräften/Rückstellkräften/Kraftgebern/Abgriffen und den Eigenschwingungen des Resonators 2 (d.h. den realen Anregungs- und Auslesemoden des Resonators 2) in Kauf genommen werden. Dies hat zur Folge, dass das Ausleseschwingungs-Abgriffsignal mit Fehlern behaftet ist. In einem derartigen Fall setzt sich das Ausleseschwingungs-Abgriffsignal also aus einem Teil, der von der realen Ausleseschwingung herrührt sowie aus einem Teil, der von der realen Anregungsschwingung herrührt, zusammen. Der unerwünschte Teil verursacht einen Nullpunktfehler des Corioliskreisels, dessen Größe jedoch nicht bekannt ist, da beim Abgreifen des Ausleseschwingungs-Abgriffsignals nicht zwischen diesen beiden Teilen differenziert werden kann.

Die der Erfindung zugrunde liegende Aufgabe ist es, ein Verfahren bereit zu stellen, mit dem der oben beschriebene Nullpunktfehler bestimmt werden kann.

Diese Aufgabe wird durch das Verfahren gemäß den Merkmalen des Patentanspruchs 1 gelöst. Ferner stellt die Erfindung einen Corioliskreisel gemäß Patentanspruch 6 bereit. Vorteilhafte Ausgestaltungen und Weiterbildungen des Erfindungsgedankens finden sich in jeweiligen abhängigen Ansprüchen.

Erfindungsgemäß wird bei einem Verfahren zur Ermittlung eines Nullpunktfehlers eines Corioliskreisels die Frequenz (vorzugsweise die Resonanzfrequenz) der Ausleseschwingung moduliert, das Ausgangssignal eines Drehratenregelkreises oder Quadraturregelkreises des Corioliskreisels synchron zur Modulation der Frequenz (Resonanzfrequenz) der Ausleseschwingung demoduliert, um ein Hilfssignal zu erhalten, das ein Maß für den Nullpunktfehler ist. Dann wird ein Kompensationssignal erzeugt, das auf den Eingang des Drehratenregelkreises oder Quadraturregelkreises gegeben wird, wobei das Kompensationssignal so geregelt wird, dass die Größe des Hilfssignals möglichst klein wird.

Unter "Resonator" wird hierbei das gesamte in Schwingung versetzbare Massensystem des Corioliskreisels verstanden, also mit Bezug auf Fig. 2 der mit Bezugsziffer 2 gekennzeichnete Teil des Corioliskreisels.

Eine der Erfindung zugrunde liegende wesentliche Erkenntnis ist, dass eine Änderung des Ausgangssignals des Drehratenregelkreises / Quadraturregelkreises aufgrund einer Frequenzänderung der Ausleseschwingung nur dann erfolgt, wenn ein entsprechender Nullpunktfehler vorliegt, d. h. wenn Fehlausrichtungen zwischen den Anregungskräften/Rückstellkräften/Kraftgebern/Abgriffen und den Eigenschwingungen des Resonators bestehen. Wenn man daher ein Kompensationssignal, das den durch die Fehlausrichtungen bewirkten Nullpunktfehler im Ausleseschwingungs-Abgriffsignal kompensiert, auf den Eingang des Drehratenregelkreises/Quadraturregelkreises oder direkt auf das Ausleseschwingungs-Abgriffsignal gibt, so ändert sich auch das Ausgangssignal des Drehratenregelkreises/Quadraturregelkreises bei einer Frequenzänderung (insbesondere Resonanzfrequenzänderung) der Ausleseschwingung nicht mehr. Da die Änderung des Ausgangssignals des Drehratenregelkreises/Quadraturregelkreises durch das Hilfssignal erfasst wird, kann der Nullpunktfehler wie folgt ermittelt und kompensiert werden: Das Kompensationssignal wird so geregelt, dass das Hilfssignal (und damit die Änderung im Ausgangssignal der Regelkreise) möglichst klein wird.

Vorzugsweise ist die Modulation der Frequenz (Resonanzfrequenz) der Ausleseschwingung eine mittelwertfreie Modulation, die beispielsweise mit 55 Hz erfolgt.

Vorzugsweise wird das Hilfssignal tiefpassgefiltert, und auf Basis des tiefpassgefilterten Hilfssignals wird das Kompensationssignal erzeugt. Das Kompensationssignal kann beispielsweise erzeugt werden durch Multiplikation eines geregelten, auf Basis des Hilfssignal erzeugten Signals mit einem Signal, das aus einem Amplitudenregler zur Regelung der Amplitude der Anregungsschwingung stammt. Vorzugsweise wird das Hilfssignal aus dem Ausgangssignal des Quadraturregelkreises ermittelt, und das Kompensationssignal auf den Eingang des Drehratenregelhreises gegeben.

Die Erfindung stellt weiterhin einen Corioliskreisel bereit, der gekennzeichnet ist durch eine Einrichtung zur Bestimmung des Nullpunktfehlers des Corioliskreisels, mit:
- einer Modulationseinheit, die die Frequenz der Ausleseschwingung des Corioliskreisels moduliert,
- einer Demodulationseinheit, die das Ausgangssignal eines Drehratenregelkreises oder Quadraturregelkreises des Corioliskreisels synchron zur Modulation der Frequenz der Ausleseschwingung demoduliert, um ein Hilfssignal zu erhalten, das ein Maß für den Nullpunktfehler ist, und
- einer Regeleinheit, die ein Kompensationssignal erzeugt und auf den Eingang des Drehratenregelkreises oder Quadraturregelkreises gibt, wobei die Regeleinheit das Kompensationssignal so regelt, dass das Hilfssignal möglichst klein wird.

Im Folgenden wird unter Bezugnahme auf die begleitenden Figuren die Erfindung in beispielsweiser Ausführungsform näher erläutert. Es zeigen:
- **Figur 1**: den schematischen Aufbau eines Corioliskreisels, der auf dem erfindungsgemäJien Verfahren basiert;
- **Figur 2**: den schematischen Aufbau eines herkömmlichen Corioliskreisels;
- **Figur 3**: eine Skizze zur Erläuterung des Zusammenspiels von Resonator, Kraftgebersystem und Abgriffssystem in einem Corioliskreisel;
- **Figuren**: **4a bis 4d** eine Skizze zur Erläuterung der Kräfte und Schwingungsamplituden für einen Corioliskreisel in Doppelresonanz;
- **Figuren**: **5a bis 5d** eine Skizze zur Erläuterung der Kräfte und Schwingungsamplituden für einen Corioliskreisel nahe Doppelresonanz;
- **Figuren**: **6a bis 6d** eine Skizze zur Erläuterung des erfindungsgemäßen Verfahrens bei Doppelresonanz.
- **Figuren**: **7a bis 7d** eine Skizze zur Erläuterung des erfindungsgemäßen Verfahrens nahe Doppelresonanz.

In den Zeichnungen sind Teile bzw. Einrichtungen, die denen aus Figur 2 entsprechen, mit den selben Bezugszeichen gekennzeichnet und werden nicht nochmals erläutert.

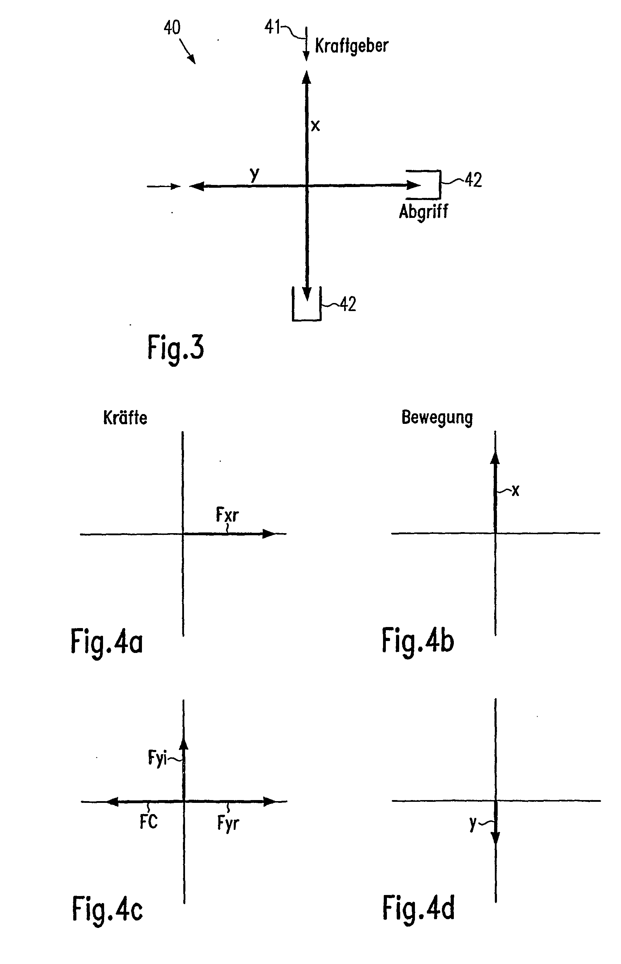

Zunächst soll die generelle Funktionsweise eines Corioliskreisels anhand der Figuren 3 bis 5 in Form einer Zeigerdiagrammdarstellung (Gauß'sche Zahlenebene) nochmals erläutert werden.

Das erfindungsgemäße Verfahren funktioniert nur, wenn im Mittel im Wesentlichen Doppelresonanz vorliegt. Die mit "Nahe Doppelresonanz" gekennzeichneten Zeichnungen zeigen die geänderten Verhältnisse, wenn durch die Modulation der Resonanzfrequenz der Ausleseschwingung die Situation "Nahe Doppelresonanz" vorliegt.

Figur 3 zeigt schematisch einen Corioliskreisel, genauer gesagt ein System 40 aus Resonator (nicht gezeigt), Kraftgebersystem 41 und Abgriffssystem 42 in einem Corioliskreisel. Weiterhin sind mögliche Schwingungen x (Anregung) und y (Auslesung) angedeutet, die bei Drehungen senkrecht zur Zeichenebene durch Corioliskräfte miteinander verkoppelt werden. Die x-Schwingung (komplex; in Resonanz rein imaginär) wird durch die Wechselkraft mit der komplexen Amplitude Fx (hier nur Realteil Fxr) angeregt. Die y-Schwingung (komplex) wird durch die Wechselkraft der komplexen Amplitude Fy mit dem Realteil Fyr und dem Imaginärteil Fyi rückgestellt. Die Drehzeiger exp(i*ω*t) sind jeweils weggelassen.

Figuren 4a bis 4d zeigen die komplexen Kräfte und komplexen Schwingungsamplituden für einen idealen Corioliskreisel mit gleicher Resonanzfrequenz von x- und y-Schwingung (Doppelresonanz). Die Kraft Fxr wird so geregelt, dass sich eine rein imaginäre, konstante x-Schwingung einstellt. Dies wird erreicht durch einen Amplitudenregler 14, der den Betrag der x-Schwingung regelt, sowie einen Phasenregler 10/Frequenzregler 9, der die Phase der x-Schwingung regelt. Die Betriebsfrequenz ω1 wird so geregelt, dass die x-Schwingung rein imaginär wird, d.h. der Realteil der x-Schwingung auf null geregelt wird.

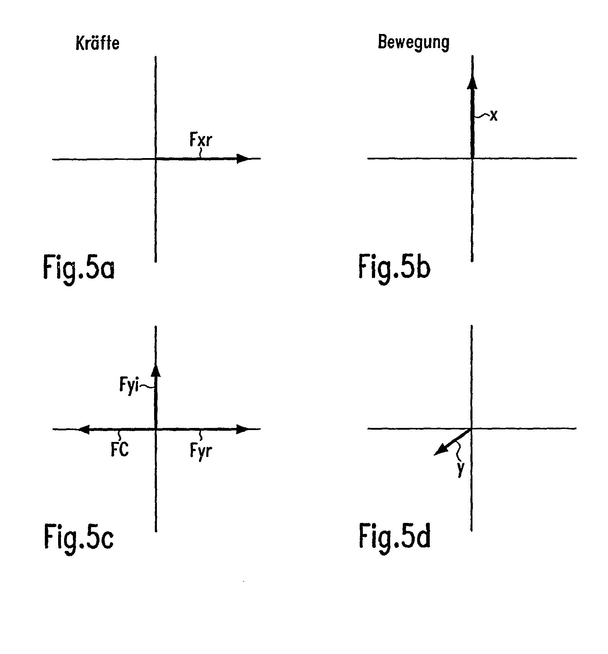

Die Corioliskraft bei Drehung, FC, ist nun rein reel, da die Corioliskraft der Geschwindigkeit der x-Schwingung proportional ist. Haben beide Schwingungen die gleiche Resonanzfrequenz, so gestaltet sich die y-Schwingung, verursacht durch die Kraft FC, wie in Fig. 4d dargestellt. Sind die Resonanzfrequenzen von x-und y-Schwingung leicht verschieden, so liegen komplexe Kräfte und komplexe Schwingungsamplituden vor, die sich wie in Figuren 5a bis 5d gezeigt gestalten. Insbesondere liegt eine durch FC angeregte y-Schwingung wie in Figur 5d gezeigt vor.

Bei Vorliegen von Doppelresonanz ist der Realteil des y-Abgriffsignals null, bei Nichtvorliegen hingegen nicht. In beiden Fällen wird bei rückgestellten Kreiseln die Corioliskraft FC durch einen Regler für Fyr, der FC kompensiert, genullt. Bei Corioliskreiseln, die doppelresonant betrieben werden, wird der Imaginärteil von y mittels Fyr genullt, der Realteil von y wird mittels Fyi genullt. Die Bandbreite der beiden Regelungen beträgt etwa 100 Hz.

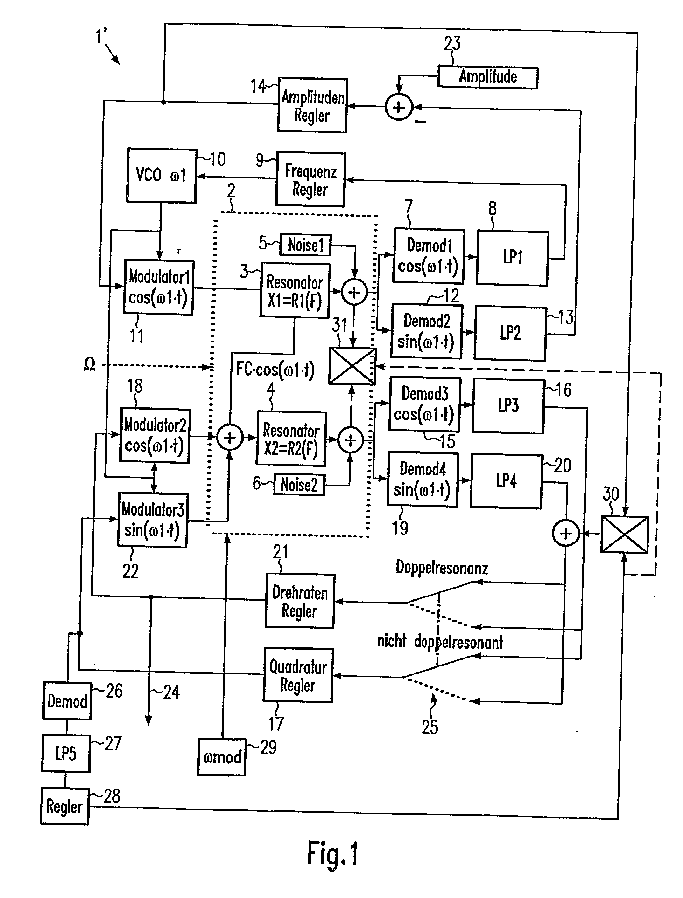

Nun wird unter Bezugnahme auf Figur 1 das erfindungsgemäße Verfahren in beispielsweiser Ausführungsform näher erläutert.

Ein rückstellender Corioliskreisel 1' ist zusätzlich mit einer Demodulationseinheit 26, einem fünften Tiefpassfilter 27, einer Regeleinheit 28, einer Modulationseinheit 29 und einem ersten Multiplikator 30 beziehungsweise alternativ einem zweiten Multiplikator 31 versehen.

Die Modulationseinheit 29 moduliert die Frequenz der Ausleseschwingung des Resonators 2 mit einer Frequenz ωmod. Ein Ausgangssignal des Quadraturregelkreises wird der Demodulationseinheit 26 zugeführt, die dieses Signal synchron zur Frequenz ωmod demoduliert, um ein Hilfssignal zu erhalten. Liegt ein Nullpunktfehler vor (d.h. liegen Fehlausrichtungen zwischen den Anregungskräften/Rückstellkräften/Kraftgebern/Abgriffen und den Eigenschwingungen des Resonators 2 vor), so ändert sich die Stärke des Hilfssignals in Abhängigkeit der Frequenz der Ausleseschwingung. Das Hilfssignal wird dem fünften Tiefpassfilter 27 zugeführt, das ein tiefpassgefiltertes Signal erzeugt und dieses der Regeleinheit 28 zuführt. Die Regeleinheit 28 erzeugt auf Basis des tiefpassgefilterten Hilfssignals ein Signal, das an den ersten Multiplikator 30 ausgegeben wird. Dieser multipliziert das von der Regeleinheit 28 ausgegebene Signal mit einem Signal, das aus dem Amplitudenregler 14 zur Regelung der Amplitude der Anregungsschwingung stammt. Ein durch die Multiplikation entstehendes Kompensationssignal wird auf den Eingang des Drehratenregelkreises aufsummiert. Die Regeleinheit 28 regelt das dem ersten Multiplikator 30 zugeführte Signal so, dass die Größe des Hilfssignals möglichst klein wird. Damit ist der Nullpunktfehler beseitigt. Desweiteren kann die Größe des Nullpunktfehlers durch das Kompensationssignal bestimmt werden, das ein Maß für den Nullpunktfehler darstellt. Alternativ kann das Ausgangssignal der Regeleinheit 28 dem zweiten Multiplikator 31 zugeführt werden, der dieses Signal mit dem Anregungsschwingungs-Abgriffsignal multipliziert und ein dadurch erzeugtes Kompensationssignal auf das Ausleseschwingungs-Abgriffsignal aufaddiert. Der Begriff "Regeleinheit" ist nicht auf die Regeleinheit 28 beschränkt, sondern kann auch die Kombination aus Regeleinheit 28 und dem ersten bzw. zweiten Multiplikator 30, 31 bedeuten.

Das der Demodulationseinheit 26 zugeführte Signal kann alternativ auch an einer anderen Stelle innerhalb der Regelkreise abgegriffen werden.

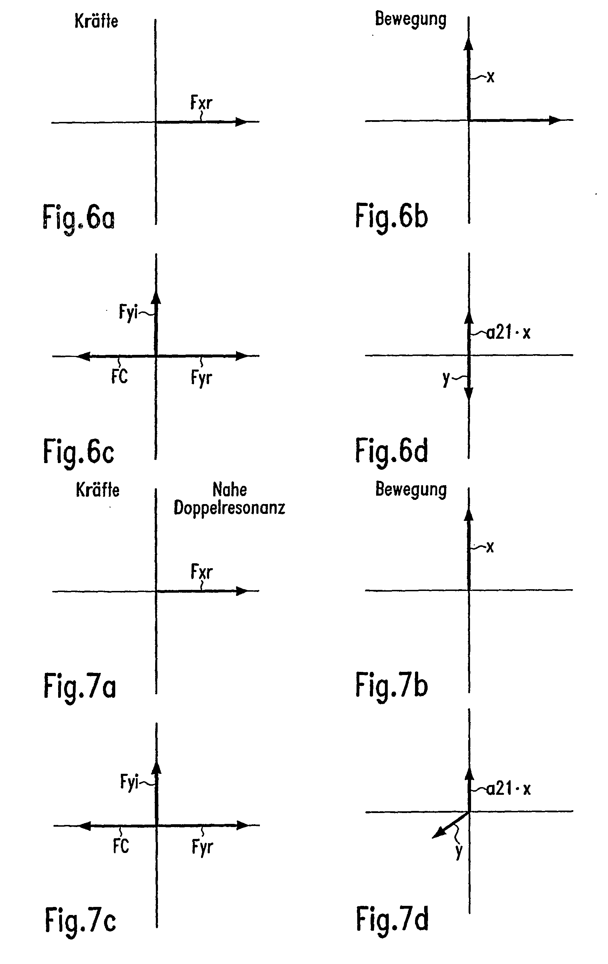

Das eben beschriebene erfindungsgemäße Verfahren lässt sich unter Bezugnahme auf Figuren 6a bis 6d und 7a bis 7d auch wir folgt darstellen:

Der Abgriff der y-Schwingung (zweiter Resonator x2, 4) "sieht" i. a. auch einen Teil der x-Schwingung (erster Resonator xl, 3): a21*x. Dadurch wird ein Nullpunktfehler des Corioliskreisels verursacht, den es zu ermitteln gilt. Figuren 6a bis 6d zeigen die Situation bei Doppelresonanz, Figuren 7a bis 7d die Situation nahe Doppelresonanz. In beiden Fällen wird das Summensignal von tatsächlicher y-Bewegung und a21*x mittels Fyi und Fyr "genullt". Wenn a21 ungleich null ist, ergibt sich bei einer Drehrate null Fxr zu ungleich null (Nullpunktfehler). Fyi wird nur null, wenn Doppelresonanz vorliegt. Bei Abweichungen der Resonanzfrequenzen entsteht ein Quadraturbias.

Die Kompensation von a21 erfolgt nun erfindungsgemäß wie folgt. Der Kreisel sei in Doppelresonanz. Die elektronisch verstimmbare Resonanzfrequenz der Ausleseschwingung wird durch die Modulationseinheit 29 mittelwertfrei moduliert (z. B. mit 55 Hz) und das Signal Fyi durch die Demodulationseinheit 26 synchron bei geschlossenen Rückstellregelkreisen demoduliert. Wäre a21 null, so würde sich Fyi mit der Frequenz nicht ändern, es ändert sich nur im Falle a21 ungleich null. Im letzteren Fall ist das tiefpassgefilterte, synchron demodulierte Fyi-Signal ungleich null. Das demodulierte Signal wird der Regeleinheit 28 (vorzugsweise in Form von Software realisiert) zugeführt, der einen Faktor a21comp (Hilfsgröße) regelt. Vom Signal des y-Abgriffs wird ein geregelter Anteil der x-Bewegung, a21comp*x, abgezogen (vorzugsweise in der Software). Die Größe dieses Anteils, a21comp, wird so geregelt, dass das demodulierte Fyi-Signal null wird. Damit befindet sich im so bereinigten Signal des y-Abgriffs kein x-Signalanteil mehr, und der durch die Auslesekreuzkopplung hervorgerufene Bias verschwindet. Bei Doppelresonanz und gleichen Güten würde schon alleine ein Kraftkreuzkopplungsregler den durch die Auslesekreuzkopplung verursachten Bias nullen. Der Grund hierfür ist, dass die Modulation von Fxr auch ein wenig die Amplitude von x moduliert. Damit werden über den Kraftkreuzkopplungsregler die Summe von Kraftanteil von x in Fyr und der Ausleseanteil von x im y-Abgriff genullt. Bei gleicher Güte verschwindet der Bias damit.

Alternativ kann zur Modulation der Ausleseschwingung auch Rauschen verwendet werden. In einem derartigen Fall findet entsprechende synchrone Demodulation des Rauschanteils im Auslesesignal Anwendung.

## Patentansprüche

1. Verfahren zur Kompensation eines Nullpunktfehlers eines Corioliskreisels (1'), bei dem
- die Frequenz der Ausleseschwingung moduliert wird,
- das Ausgangssignal eines Drehratenregelkreises oder Quadraturregelkreises des Corioliskreisels (1') synchron zur Modulation der Frequenz der Ausleseschwingung demoduliert wird, um ein Hilfssignal zu erhalten, das ein Maß für den Nullpunktfehler ist,
- ein Kompensationssignal erzeugt wird, das auf den Eingang des Drehratenregelkreises oder Quadraturregelkreises gegeben wird, wobei
- das Kompensationssignal so geregelt wird, dass die Größe des Hilfssignals möglichst klein wird.

2. Verfahren nach Anspruch 1, **dadurch gekennzeichnet, dass** die Modulation der Frequenz der Ausleseschwingung eine mittelwertfreie Modulation ist.

3. Verfahren nach Anspruch 1 oder 2, **dadurch gekennzeichnet, dass** das Hilfssignal tiefpassgefiltert wird, und auf Basis des tiefpassgefilterten Hilfssignals das Kompensationssignal erzeugt wird.

4. Verfahren nach Anspruch 1, **dadurch gekennzeichnet, dass** das Kompensationssignal erzeugt wird durch Multiplikation eines geregelten, auf Basis des Hilfssignal erzeugten Signals mit einem Signal, das von einem Amplitudenregler zur Regelung der Amplitude der Anregungsschwingung stammt.

5. Verfahren nach einem der vorstehenden Ansprüche, **dadurch gekennzeichnet, dass** das Hilfssignal aus dem Ausgangssignal des Quadraturregelkreises ermittelt wird, und das Kompensationssignal auf den Eingang des Drehratenregelkreises gegeben wird.

6. Corioliskreisel (1'), **gekennzeichnet durch** eine Einrichtung zur Bestimmung des Nullpunktfehlers des Corioliskreisels (1'), mit:
- einer Modulationseinheit (29), die die Frequenz der Ausleseschwingung des Corioliskreisels (1') moduliert,
- einer Demodulationseinheit (26), die das Ausgangssignal eines Drehratenregelkreises oder Quadraturregelkreises des Corioliskreisels (1') synchron zur Modulation der Frequenz der Ausleseschwingung demoduliert, um ein Hilfssignal zu erhalten, das ein Maß für den Nullpunktfehler ist, und
- einer Regeleinheit (28), die ein Kompensationssignal erzeugt und auf den Eingang des Drehratenregelkreises oder Quadraturregelkreises gibt, wobei die Regeleinheit (28) das Kompensationssignal so regelt, dass das Hilfssignal möglichst klein wird.

## Claims

1. A method for compensation for a zero error in a Coriolis gyro (1'), in which:
- the frequency of the read oscillation is modulated,
- the output signal from a rotation rate control loop or quadrature control loop for the Coriolis gyro (1') is demodulated in synchronism with the modulation of the frequency of the read oscillation in order to obtain an auxiliary signal which is a measure of the zero error,
- a compensation signal is produced, and is passed to the input of the rotation rate control loop or quadrature control loop, with
- the compensation signal being controlled such that the magnitude of the auxiliary signal is as small as possible.

2. The method as claimed in claim 1, **characterized in that** the modulation of the frequency of the read oscillation is a modulation with a zero mean value.

3. The method as claimed in claim 1 or 2, **characterized in that** the auxiliary signal is low-pass-filtered, and the compensation signal is produced on the basis of the low-pass-filtered auxiliary signal.

4. The method as claimed in claim 1, **characterized in that** the compensation signal is produced by multiplication of a controlled signal, which is produced on the basis of the auxiliary signal, by a signal which originates from an amplitude regulator for controlling the amplitude of the stimulating oscillation.

5. The method as claimed in one of the preceding claims, **characterized in that** the auxiliary signal is determined from the output signal from the quadrature control loop, and the compensation signal is passed to the input of the rotation rate control loop.

6. A Coriolis gyro (1'), **characterized by** a device for determination of the zero error of the Coriolis gyro (1'), having:
- a modulation unit (29) which modulates the frequency of the read oscillation of the Coriolis gyro (1'),
- a demodulation unit (26), which demodulates the output signal from a rotation rate control loop or quadrature control loop of the Coriolis gyro (1') in synchronism with the modulation of the frequency of the read oscillation, in order to obtain an auxiliary signal which is a measure of the zero error, and
- a control unit (28), which produces a compensation signal and passes this to the input of the rotation rate control loop or quadrature control loop, with the control unit (28) controlling the compensation signal such that the auxiliary signal is as small as possible.

## Revendications

1. Procédé pour compenser une déviation résiduelle d'un gyroscope vibrant (1'), dans lequel
- la fréquence de l'oscillation de lecture est modulée,
- le signal de sortie d'un circuit de réglage de vitesse de rotation ou d'un circuit de réglage en quadrature du gyroscope vibrant (1') est démodulé de façon synchrone par rapport à la modulation de la fréquence de l'oscillation de lecture, pour obtenir un signal auxiliaire, qui est une mesure pour la déviation résiduelle,
- un signal de compensation est généré, qui est distribué à l'entrée du circuit de réglage de vitesse de rotation ou du circuit de réglage en quadrature, dans lequel
- le signal de compensation est réglé de sorte que la grandeur du signal auxiliaire soit le plus petit possible.

2. Procédé selon la revendication 1, **caractérisé en ce que** la modulation de la fréquence de l'oscillation de lecture est une modulation sans valeur moyenne.

3. Procédé selon la revendication 1 ou 2, **caractérisé en ce que** le signal auxiliaire est filtré par un filtre passe bas, et le signal de compensation est généré en fonction du signal auxiliaire filtré par le filtre passe bas.

4. Procédé selon la revendication 1, **caractérisé en ce que** le signal de compensation est généré par la multiplication d'un signal réglé généré en fonction du signal auxiliaire par un signal, qui provient d'un régulateur d'amplitude pour le réglage de l'amplitude de l'oscillation d'excitation.

5. Procédé selon l'une des revendications précédentes, **caractérisé en ce que** le signal auxiliaire est déterminé à partir du signal de sortie du circuit de réglage en quadrature, et le signal de compensation est distribué à l'entrée du circuit de réglage de vitesse de rotation.

6. Gyroscope vibrant (1'), **caractérisé par** un dispositif pour déterminer la déviation résiduelle du gyroscope vibrant (1'), comportant :
- une unité de modulation (29), qui module la fréquence de l'oscillation de lecture du gyroscope vibrant (1'),
- une unité de démodulation (26), qui démodule le signal de sortie d'un circuit de réglage de vitesse de rotation ou d'un circuit de réglage en quadrature du gyroscope vibrant (1') de façon synchrone par rapport à la modulation de la fréquence de l'oscillation de lecture, pour obtenir un signal auxiliaire, qui est une mesure pour la déviation résiduelle, et
- une unité de réglage (28), qui génère un signal de compensation et le distribue à l'entrée d'un circuit de réglage de vitesse de rotation ou d'un circuit de réglage en quadrature, où l'unité de réglage (28) règle le signal de compensation de sorte que le signal auxiliaire est le plus petit possible.
